# EUROPÄISCHE PATENTSCHRIFT

(11) **EP 4 556 161 B1**
(45) Veröffentlichungstag und Bekanntmachung des Hinweises auf die Patenterteilung: **09.09.2026**
(21) Anmeldenummer: 23209906.9
(22) Anmeldetag: 14.11.2023
(51) Int. Cl.: B23Q 39/00, B23Q 39/04, B23Q 1/66, B23Q 11/08

(54) **WERKZEUGMASCHINE**
MACHINE TOOL
MACHINE-OUTIL

(43) Veröffentlichungstag der Anmeldung: 21.05.2025
(73) Patentinhaber: Schwäbische Werkzeugmaschinen GmbH, 78713 Schramberg-Waldmössingen (DE)
(72) Erfinder: Stempfer, Christian, 4943 Geinberg (AT); Weber, Stefan, 78662 Bösingen (DE)
(74) Vertreter: Schorr, Peter Karl

(56) Entgegenhaltungen:
- EP-A1- 0 313 872
- EP-A1- 0 613 755
- EP-A1- 2 431 126
- EP-B1- 1 575 737
- DE-A1- 10 119 175
- DE-A1- 102017 122 439
- DE-A1- 19 907 617
- US-A- 5 658 105

## Beschreibung

Die Erfindung betrifft eine Werkzeugmaschine mit einem Maschinengestell, mit mindestens einer ersten Arbeitsspindel, mit mindestens einer zweiten Arbeitsspindel, mit mindestens einem der ersten Arbeitsspindel zugeordneten ersten Schwenkträger, der im Maschinengestell um eine erste Schwenkträgerachse schwenkbar gelagert ist, und der mindestens einen ersten Werkstücktisch und mindestens einen zweiten Werkstücktisch umfasst, die bezüglich der ersten Schwenkträgerachse auf einander gegenüberliegenden Seiten am ersten Schwenkträger angeordnet sind, und mit mindestens einem der zweiten Arbeitsspindel zugeordneten zweiten Schwenkträger, der im Maschinengestell um eine parallel zur ersten Schwenkträgerachse verlaufende und zur ersten Schwenkträgerachse beabstandete zweite Schwenkträgerachse schwenkbar gelagert ist, und der mindestens einen ersten Werkstücktisch und mindestens einen zweiten Werkstücktisch umfasst, die bezüglich der zweiten Schwenkträgerachse auf einander gegenüberliegenden Seiten am zweiten Schwenkträger angeordnet sind, wobei der erste Schwenkträger und/oder der zweite Schwenkträger jeweils von einer ersten Schwenkstellung, in der der jeweils erste Werkstücktisch in einem Arbeitsbereich angeordnet und der ersten bzw. der zweiten Arbeitsspindel zugänglich ist, jeweils in eine zweite Schwenkstellung überführbar ist/sind, in der der jeweils zweite Werkstücktisch im Arbeitsbereich angeordnet und der ersten bzw. der zweiten Arbeitsspindel zugänglich ist.

Werkzeugmaschinen sind in unterschiedlichen Ausführungsformen und Ausgestaltungen aus dem Stand der Technik bekannt. Diese können beispielsweise Maschinengestelle umfassen, an denen ein Werkstücktisch angeordnet ist, an dem Werkstücke lösbar befestigt werden können. Die Werkstücke können durch eine Arbeitsspindel der Werkzeugmaschine bearbeitet werden.

Bei bekannten Werkzeugmaschinen wird der Werkstücktisch mit Werkstücken beladen, während die Arbeitsspindel außer Betrieb ist. Darüber hinaus ruht die Arbeitsspindel, wenn die Werkstücke nach der Bearbeitung vom Werkstücktisch entfernt werden. Hierdurch können hohe Stillstandzeiten der Werkzeugmaschine auftreten.

Darüber hinaus sind Werkzeugmaschinen bekannt, bei denen am Maschinengestell ein so genannter Schwenkträger schwenkbar angeordnet ist, an dem zwei Werkstücktische angeordnet sind, die bezüglich der Schwenkträgerachse des Schwenkträgers auf einander gegenüberliegenden Seiten am Schwenkträger angeordnet sind. Durch Drehen des Schwenkträgers um die Schwenkträgerachse wird hierbei jeweils ein Werkstücktisch von einem Arbeitsbereich in einen Beladebereich überführt und gleichzeitig der im Beladebereich befindliche Werkstücktisch in den Arbeitsbereich. Hierdurch können die Stillstandzeiten reduziert werden.

Darüber hinaus sind Schwenkträger bekannt, an denen auf jeder Seite des Schwenkträgers zwei Werkstücktische angeordnet sind, wobei jedem Werkstücktisch eine eigene Arbeitsspindel zugeordnet ist. Hierdurch muss ein Abstand zu den Arbeitsspindeln gewährleistet werden, der ein kollisionsfreies Schwenken der Schwenkträger ermöglicht, wodurch der Abstand von Schwenkträgerachse zur Arbeitsspindel sehr groß ist und die Werkzeugmaschine einen hohen Platzbedarf besitzt.

Eine gattungsgemäße Werkzeugmaschine ist bekannt aus EP 1 575 737 B1.

Eine Aufgabe eines Ausführungsbeispiels der Erfindung ist, eine Werkzeugmaschine vorzuschlagen, bei der ein Abstand zwischen Schwenkträgerachse und Arbeitsspindel, insbesondere bei gleichbleibenden oder verbesserten Bearbeitungszeiten, reduziert ist.

Diese Aufgabe wird bei einer eingangs genannten Werkzeugmaschine, dadurch gelöst, dass die erste Schwenkträgerachse und die parallel zur ersten Schwenkträgerachse verlaufende zweite Schwenkträgerachse parallel zu einer horizontal verlaufenden X-Achse verlaufen, wobei die erste Schwenkträgerachse und die zweite Schwenkträgerachse bezüglich einer vertikal verlaufenden Y-Achse zueinander beabstandet sind und bezüglich der vertikal verlaufenden Y-Achse übereinander angeordnet sind.

Dadurch, dass die Werkzeugmaschine einen ersten Schwenkträger und einen zweiten Schwenkträger umfasst, die jeweils einen ersten Werkstücktisch und einen zweiten Werkstücktisch umfassen, können die Abstände der Arbeitsspindeln zu den Schwenkachsen gering gehalten werden. Das Verschwenken zweier Schwenkträger, die auf jeder Seite einen Werkstücktisch aufweisen, nutzt jeweils einen kleineren Drehkreis als ein großer Schwenkträger, der beidseitig zwei Werkstücktische aufweist.

Dadurch, dass durch die erste Arbeitsspindel und durch die zweite Arbeitsspindel in der ersten Schwenkstellung jeweils die ersten Werkstücktische und in der zweiten Schwenkstellung die zweiten Werkstücktische zugänglich und darin anordenbare Werkstücke bearbeitbar sind, ist eine bearbeitbare Anzahl von Werkstücken durch die Werkzeugmaschine hoch.

Dadurch, dass die erste Schwenkträgerachse und die parallel zur ersten Schwenkträgerachse verlaufende zweite Schwenkträgerachse parallel zu einer horizontal verlaufenden X-Achse verlaufen und bezüglich der vertikal verlaufenden Y-Achse zueinander beabstandet sind, werden der erste Schwenkträger und der zweite Schwenkträger um eine Horizontale von der ersten Schwenkstellung in die zweite Schwenkstellung und zurück, überführt.

Unter einem Überführen wird insbesondere ein Drehen um die jeweilige Schwenkträgerachse oder ein Schwenken um die jeweilige Schwenkträgerachse verstanden.

Durch die unterschiedlichen Überführungsmöglichkeiten, bedingt durch den Verlauf der ersten Schwenkträgerachse und der parallel zur ersten Schwenkträgerachse verlaufenden zweiten Schwenkträgerachse, kann die Werkzeugmaschine an unterschiedliche Bedarfe sowie räumliche Gegebenheiten, insbesondere dem vorhandenen Bauraum, optimiert angepasst werden.

Das Überführen von der ersten Schwenkstellung in die zweite Schwenkstellung kann eine Rotation um 180° um die erste Schwenkachse bzw. zweite Schwenkachse umfassen.

Das Wort "bzw." ist im ursprünglichen Wortsinn "und im anderen Fall" zu verstehen und setzt die Beziehung des vorangegangenen Satzes oder Halbsatzes fort.

An dem ersten Schwenkträger kann jeweils mindestens ein erster Werkstücktisch und mindestens ein zweiter Werkstücktisch angeordnet sein. Diese liegen einander bezüglich der ersten Schwenkträgerachse gegenüber.

Darüber hinaus sind Ausführungsformen der Werkzeugmaschine denkbar, bei denen der erste Schwenkträger zwei erste Werkstücktische, die in der ersten Schwenkstellung beide im Arbeitsbereich angeordnet sind und mindestens zwei zweite Werkstücktische umfasst, die auf der den ersten Werkstücktischen gegenüberliegenden Seite angeordnet sind.

Gleiches gilt für den zweiten Schwenkträger. Auch dieser kann zwei erste Werkstücktische umfassen, die beide im Arbeitsbereich angeordnet sind und zwei zweite Werkstücktische, die auf der den ersten Werkstücktischen gegenüberliegenden Seite bezüglich der zweiten Schwenkträgerachse am zweiten Schwenkträger angeordnet sind.

Ferner sind Ausführungsformen denkbar, bei denen am ersten Schwenkträger und/oder am zweiten Schwenkträger mindestens drei erste Werkstücktische und mindestens drei zweite Werkstücktische angeordnet sind.

Es erweist sich als vorteilhaft, wenn in der ersten Schwenkstellung des ersten Schwenkträgers und/oder in der ersten Schwenkstellung des zweiten Schwenkträgers der jeweils zweite Werkstücktisch in einem Beladebereich angeordnet ist, und/oder wenn in der zweiten Schwenkstellung des ersten Schwenkträgers und/oder in der zweiten Schwenkstellung des zweiten Schwenkträgers der jeweils erste Werkstücktisch im Beladebereich angeordnet ist.

Wenn in der ersten Schwenkstellung des ersten Schwenkträgers und/oder in der ersten Schwenkstellung des zweiten Schwenkträgers jeweils der jeweils zweite Werkstücktisch im Beladebereich angeordnet ist, können die zweiten Werkstücktische mit Werkstücken beladen werden oder, wenn diese zuvor im Arbeitsbereich durch die Arbeitsspindeln bearbeitet wurden, vom Werkstücktisch entnommen werden. Gleiches gilt entsprechend für die ersten Werkstücktische.

Um ein Bearbeiten von Werkstücken zu vereinfachen, erweist es sich als vorteilhaft, wenn der mindestens eine erste Werkstücktisch und/oder der mindestens eine zweite Werkstücktisch des ersten Schwenkträgers und/oder wenn der mindestens eine erste Werkstücktisch und/oder der mindestens eine zweite Werkstücktisch des zweiten Schwenkträgers jeweils zum Aufnehmen und Festlegen mindestens eines Werkstücks ausgebildet ist/sind.

Hierzu können die ersten Werkstücktische und die zweiten Werkstücktische Aufnahmen umfassen, an denen ein Werkstück oder mehrere Werkstücke lösbar an jeweils einem Werkstücktisch festlegbar sind. Unter lösbar festlegbar kann eine kraft- und/oder formschlüssige Verbindung verstanden werden.

Es sind Ausführungsformen der Werkzeugmaschine denkbar, bei denen der erste Schwenkträger und der zweite Schwenkträger in einem unabhängigen Betriebsmodus bezüglich ihrer Kinematik entkoppelt, separat und unabhängig voneinander in die erste Schwenkstellung und in die zweite Schwenkstellung überführbar sind und/oder bei denen der erste Schwenkträger und der zweite Schwenkträger in einem abhängigen Betriebsmodus bezüglich ihrer Kinematik gekoppelt, gemeinsam und gleichzeitig in die erste Schwenkstellung und in die zweite Schwenkstellung überführbar sind.

Wenn der erste Schwenkträger und der zweite Schwenkträger in einem unabhängigen Betriebsmodus bezüglich ihrer Kinematik entkoppelt, separat und unabhängig voneinander in die erste Schwenkstellung und in die zweite Schwenkstellung überführbar sind, kann bereits ein mit Werkstücken beladener Werkstücktisch in den Arbeitsbereich überführt werden, während der am anderen Schwenkträger angeordnete Werkstücktisch noch beladen wird. Hierdurch kann ein Bearbeiten von Werkstücken flexibler gestaltet sein. Solchenfalls sind die erste Schwenkträgerachse und die zweite Schwenkträgerachse jeweils durch einen eigenen Antrieb von der ersten Schwenkstellung in die zweite Schwenkstellung und zurück überführbar.

Wenn der erste Schwenkträger und der zweite Schwenkträger in einem abhängigen Betriebsmodus bezüglich ihrer Kinematik gekoppelt, gemeinsam und gleichzeitig in die erste Schwenkstellung und in die zweite Schwenkstellung überführbar sind, kann die Werkzeugmaschine einfach bauen. Insbesondere können dann dem ersten Schwenkträger und dem zweiten Schwenkträger zum Drehen um die erste Schwenkträgerachse, bzw. die zweite Schwenkträgerachse, ein gemeinsamer Antrieb zugeordnet sein. Hierdurch ist die Werkzeugmaschine bauteilreduziert, bzw. komponentenreduziert ausbildbar.

Es erweist sich als vorteilhaft, wenn die mindestens eine erste Arbeitsspindel um eine erste Spindelachse drehbar gelagert ist und/oder wenn die mindestens eine zweite Arbeitsspindel um eine zweite Spindelachse drehbar gelagert ist, wobei die erste Spindelachse und/oder die zweite Spindelachse parallel zu einer horizontal verlaufenden Z-Achse verläuft, die quer zur vertikal verlaufenden Y-Achse und quer zur horizontal verlaufenden X-Achse verläuft und/oder wobei die erste Spindelachse und die zweite Spindelachse parallel zueinander verlaufen.

Wenn die erste Spindelachse und die zweite Spindelachse parallel zueinander verlaufen, können Werkstücke am ersten Schwenkträger sowie Werkstücke am zweiten Schwenkträger bearbeitet werden und eine Kollision der Arbeitsspindeln vermieden werden.

Darüber hinaus sind Ausführungsformen der Werkzeugmaschine denkbar, bei denen die erste Arbeitsspindel und die zweite Arbeitsspindel bezüglich ihrer Kinematik entkoppelt, separat und unabhängig voneinander betreibbar und/oder verfahrbar sind und/oder bei denen die erste Arbeitsspindel und die zweite Arbeitsspindel bezüglich ihrer Kinematik gekoppelt, gemeinsam und gleichzeitig betreibbar und/oder verfahrbar sind.

Wenn die erste Arbeitsspindel und die zweite Arbeitsspindel bezüglich ihrer Kinematik entkoppelt, separat und unabhängig voneinander betreibbar und/oder verfahrbar sind, kann ein Werkstücktisch am ersten Schwenkträger oder ein Werkstücktisch am zweiten Schwenkträger bearbeitet werden, während sich der jeweils andere Schwenkträger noch bei einem Belade- oder Entladevorgang befindet. Darüber hinaus ist es hierdurch ermöglicht, Werkstücke unterschiedlicher Ziel-Kontur zu bearbeiten.

Wenn die erste Arbeitsspindel und die zweite Arbeitsspindel bezüglich ihrer Kinematik gekoppelt, gemeinsam und gleichzeitig betreibbar und/oder verfahrbar sind, kann die Werkzeugmaschine vereinfacht ausgebildet sein. Eine derartige Bauform erweist sich insbesondere dann als vorteilhaft, wenn die zu bearbeitenden Werkstücke eine identische Ziel-Kontur haben sollen.

Darüber hinaus erweist es sich als vorteilhaft, wenn die erste Arbeitsspindel und die zweite Arbeitsspindel vertikal übereinander angeordnet sind, wenn die die erste Schwenkträgerachse und die parallel zur ersten Schwenkträgerachse verlaufende zweite Schwenkträgerachse parallel zu einer horizontal verlaufenden X-Achse verlaufen.

Grundsätzlich ist es denkbar, dass die ersten Werkstücktische und/oder die zweiten Werkstücktische drehfest am jeweiligen Schwenkträger angeordnet sind. Ein Bearbeiten von Werkstücken lässt sich verbessern, wenn der jeweils erste Werkstücktisch um eine erste Werkstücktischachse, welche parallel oder quer zur der ihr zugeordneten ersten Schwenkträgerachse des ersten Schwenkträgers, bzw. zweiten Schwenkträgerachse des zweiten Schwenkträgers verläuft, schwenkbar gelagert ist und/oder wenn der jeweils zweite Werkstücktisch um eine zweite Werkstücktischachse, welche parallel oder quer zur der ihr zugeordneten ersten Schwenkträgerachse des ersten Schwenkträgers, bzw. zweiten Schwenkträgerachse des zweiten Schwenkträgers verläuft.

Die ersten Werkstücktischachsen der ersten Werkstücktische können parallel oder quer zur zugeordneten Schwenkträgerachse verlaufen. Solchenfalls sind Ausführungsformen denkbar, bei denen die erste Schwenkträgerachse in einer Vertikalen verläuft und die ersten Werkstücktischachsen und/oder die zweiten Werkstücktischachsen quer dazu verlaufen. Darüber hinaus können bei weiteren Ausführungsformen sowohl die ersten Werkstücktischachsen als auch die zugeordneten Schwenkträgerachsen parallel zueinander verlaufen. Gleiches gilt für die zweiten Werkstücktischachsen.

Es werden Ausführungsformen der Werkzeugmaschine bevorzugt, bei denen die erste Schwenkträgerachse, die zweite Schenkträgerachse sowie die ersten Werkstücktischachsen und die zweiten Werkstücktischachsen parallel zueinander und parallel zur horizontal verlaufenden X-Achse verlaufen, wobei die erste Schwenkträgerachse und die zweite Schenkträgerachse, wobei die ersten Werkstücktischachsen untereinander und/oder wobei die zweiten Werkstücktischachsen untereinander bezüglich der quer dazu verlaufenden vertikalen Y-Achse miteinander fluchten oder versetzt zueinander angeordnet sind.

Bei den zuvor beschriebenen Ausführungsformen der Werkzeugmaschine verlaufen alle Achsen der Werkstücktische und der Schwenkträger parallel zueinander.

Die erste Spindelachse der ersten Arbeitsspindel und/oder die zweite Spindelachse der zweiten Arbeitsspindel, können in beiden räumlichen Ausrichtungen der Schwenkträgerachsen und der dazugehörenden Werkstücktischachsen quer dazu verlaufen.

Die Werkzeugmaschine lässt sich bezüglich ihrer räumlichen Abmaße kompakt ausgestalten, wenn in der ersten Schwenkstellung und in der zweiten Schwenkstellung der erste Werkstücktisch und der zweite Werkstücktisch eines Schwenkträgers jeweils bezüglich der zugehörigen Schwenkträgerachse des jeweiligen Schwenkträgers, an dem sie angeordnet sind, punktsymmetrisch zueinander angeordnet sind und , bei einem horizontalen Verlauf der jeweiligen Schwenkträgerachse, der erste Werkstücktisch und der zweite Werkstücktisch bezüglich einer vertikalen Achse versetzt zueinander angeordnet sind und insbesondere die Schwenkbereiche des ersten Werkstücktischs und des zweiten Werkstücktischs des dazugehören Schwenkträgers mit einer durch die Schwenkträgerachse verlaufenden vertikalen Ebene überlappen.

Hierdurch ist eine sogenannte verschränkte Anordnung der Werkstücktische am Schwenkträger hergestellt, wodurch die Werkezugmaschine raumsparender ausbildbar ist.

Diese verschränkte Anordnung lässt sich beispielsweise erreichen, wenn in der ersten Schwenkstellung der Abstand der ersten Werkstücktische zur Schwenkachse geringer ist als maximal möglich.

Die Schwenkbereiche der ersten Werkstücktische und die Schwenkbereiche der den ersten Werkstücktischen jeweils zugeordneten zweiten Werkstücktische können einander überlappen.

Bei einer derartigen Ausführungsform können die jeweiligen Werkstücktischachsen bezüglich einer quer verlaufenden Achse versetzt zueinander angeordnet sein. Wenn die jeweiligen Werkstücktischachsen beispielsweise parallel zu einer horizontal verlaufenden X-Achse verlaufen, ist die erste Werkstücktischachse zur zweiten Werkstücktischachse bezüglich einer vertikal verlaufenden Y-Achse versetzt angeordnet.

Bei Ausführungsformen, bei denen die erste Werkstücktischachse und die zweite Werkstücktischachse parallel zu einer vertikal verlaufenden Y-Achse verlaufend angeordnet sind, können diese bei der einander überlappenden Festlegung am Schwenkträger bezüglich der quer dazu verlaufenden horizontalen X-Achse, versetzt zueinander angeordnet sein.

Darüber hinaus erweist es sich als vorteilhaft, wenn beim ersten Schwenkträger der Abstand zwischen erster Schwenkträgerachse und erster Werkstücktischachse kleiner ist, als der Umkreisradius des ersten Werkstücktisches und/oder der Abstand zwischen erster Schwenkträgerachse und zweiter Werkstücktischachse kleiner ist, als der Umkreisradius des zweiten Werkstücktisches, und/oder wenn beim zweiten Schwenkträger der Abstand zwischen zweiter Schwenkträgerachse und erster Werkstücktischachse kleiner ist, als der Umkreisradius des ersten Werkstücktisches und/oder der Abstand zwischen zweiter Schwenkträgerachse und zweiter Werkstücktischachse kleiner ist, als der Umkreisradius des zweiten Werkstücktisches.

Auch hierdurch ist ein bauraumreduziertes Ausgestalten der Werkzeugmaschine ermöglicht.

Um ein Beladen und/oder Entladen eines Werkstücktisches bei gleichzeitigem Bearbeiten des gegenüberliegenden Werkstücktisches zu ermöglichen, erweist es sich als vorteilhaft, wenn der erste Schwenkträger eine erste Trennwand umfasst, durch die der erste Werkstücktisch und der zweite Werkstücktisch in der ersten Schwenkstellung und in der zweiten Schwenkstellung räumlich voneinander abgetrennt sind und der Beladebereich zum Arbeitsbereich in Gänze oder zumindest abschnittsweise abgeschirmt ist und/oder wenn der zweite Schwenkträger eine zweite Trennwand umfasst, durch die der erste Werkstücktisch und der zweite Werkstücktisch in der ersten Schwenkstellung und in der zweiten Schwenkstellung räumlich voneinander abgetrennt sind und der Beladebereich zum Arbeitsbereich in Gänze oder zumindest abschnittsweise abgeschirmt ist.

Solchenfalls ist ein Bediener der Werkzeugmaschine durch die erste Trennwand und/oder durch die zweite Trennwand beim Zugriff auf den Beladebereich vom Arbeitsbereich abgeschirmt.

Der Arbeitsbereich kann sich sowohl über den ersten Schwenkträger als auch den zweiten Schwenkträger erstrecken. Darüber hinaus sind Ausführungsformen der Werkzeugmaschine denkbar, bei denen der erste Schwenkträger einen ersten Arbeitsbereich und der zweite Schwenkträger einen zweiten Arbeitsbereich umfasst, die räumlich voneinander getrennt sind.

Ferner kann solchenfalls der erste Schwenkträger einen ersten Beladebereich und der zweite Schwenkträger einen zweiten Beladebereich umfassen, die räumlich voneinander getrennt sind.

Die Werkzeugmaschine lässt sich vereinfacht realisieren, wenn dem ersten Schwenkträger und dem zweiten Schwenkträger ein gemeinsamer Arbeitsbereich und ein gemeinsamer Beladebereich zugeordnet sind.

Insbesondere, wenn der erste Werkstücktisch und der zweite Werkstücktisch einander zumindest abschnittsweise überlappen, kann bei einer Ausführungsform der Werkzeugmaschine vorgesehen sein, dass die erste Trennwand des ersten Schwenkträgers um eine parallel zur ersten Schwenkträgerachse verlaufende Achse flexibel und/oder elastisch biegbar ist und/oder dass die zweite Trennwand des zweiten Schwenkträgers um eine parallel zur zweiten Schwenkträgerachse verlaufende Achse flexibel und/oder elastisch biegbar ist.

Hierdurch ist das Abtrennen des Arbeitsbereichs vom Beladebereich vereinfacht anpassbar.

Grundsätzlich ist es denkbar, dass der erste Schwenkträger unmittelbar, spaltund/oder fugenlos zum zweiten Schwenkträger benachbart angeordnet ist. Hierdurch lässt sich die Werkzeugmaschine bezüglich ihrer Dimensionierung raumreduziert ausgestalten.

Bei einer Ausführungsform der Werkzeugmaschine ist vorgesehen, dass das Maschinengestell mindestens einen Trennabschnitt umfasst, der zwischen dem ersten Schwenkträger und dem zweiten Schwenkträger angeordnet ist, wobei die erste Trennwand des ersten Schwenkträgers, der Trennabschnitt des Maschinengestells und die zweite Trennwand des zweiten Schwenkträgers in der ersten Schwenkstellung und in der zweiten Schwenkstellung den Arbeitsbereich vom Beladebereich räumlich zueinander in Gänze oder zumindest abschnittsweise spalt und/oder fugenlos voneinander trennen.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkzeugmaschine.

In der Zeichnung zeigt:

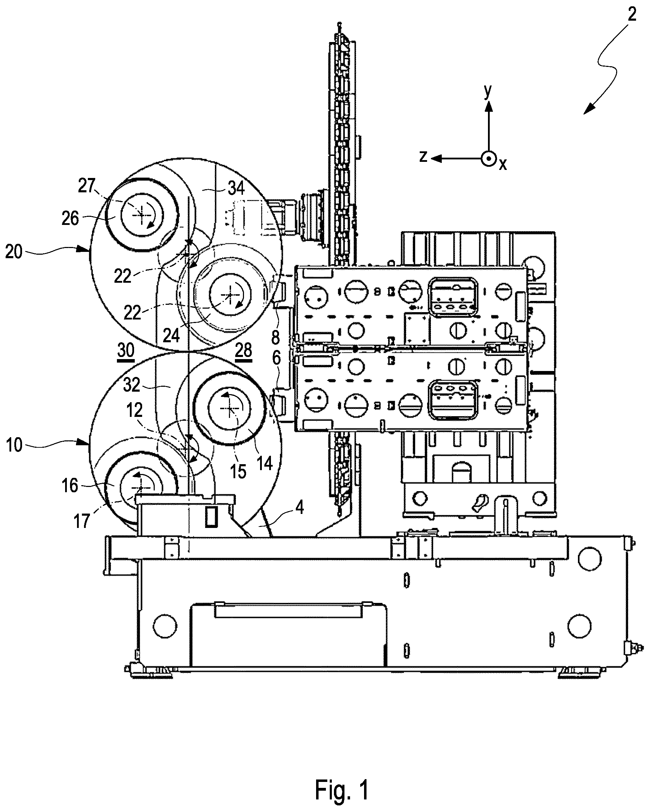

- Figur 1: Eine teilgeschnittene Seitenansicht auf ein Ausführungsbeispiel der Werkzeugmaschine.

Die Figur zeigt eine insgesamt mit dem Bezugszeichen 2 versehene Werkzeugmaschine. Die Werkzeugmaschine 2 umfasst ein Maschinengestellt 4. Darüber hinaus umfasst die Werkzeugmaschine 2 eine erste Arbeitsspindel 6 und eine zweite Arbeitsspindel 8. Bei dem in Figur 1 gezeigten Ausführungsbeispiel sind die erste Arbeitsspindel 6 und die zweite Arbeitsspindel 8 bezüglich einer vertikal verlaufenden Y-Achse übereinander angeordnet.

An dem Maschinengestell 4 ist ein erster Schwenkträger 10 angeordnet, der der ersten Arbeitsspindel 6 zugeordnet ist. Der erste Schwenkträger 10 ist im Maschinengestell 4 um eine erste Schwenkträgerachse 12 schwenkbar gelagert. An dem ersten Schwenkträger 10 ist ein erster Werkstücktisch 14 und ein zweiter Werkstücktisch 16 angeordnet. Der erste Werkstücktisch 14 und der zweite Werkstücktisch 16 sind bezüglich der Schwenkträgerachse 12 aufeinander gegenüberliegenden Seiten am ersten Schwenkträger 10 angeordnet.

Darüber hinaus zeigt Figur 1 ein Ausführungsbeispiel der Werkzeugmaschine 2, bei der am Maschinengestell 4 ein zweiter Schwenkträger 20 angeordnet ist, der um eine parallel zur ersten Schwenkträgerachse 12 verlaufende zweite Schwenkträgerachse 22 schwenkbar gelagert ist. Am zweiten Schwenkträger 20 ist ein erster Werkstücktisch 24 und ein zweiter Werkstücktisch 26 angeordnet. Erster Werkstücktisch 24 und zweiter Werkstücktisch 26 sind bezüglich der zweiten Schwenkträgerachse 22 auf einander gegenüberliegenden Seiten am zweiten Schwenkträger 20 angeordnet.

Der erste Schwenkträger 10 und der zweite Schwenkträger 20 sind jeweils von einer ersten Schwenkstellung, in der die jeweils ersten Werkstücktische 14, 24 in einem Arbeitsbereich 28 angeordnet sind in eine zweite Schwenkstellung überführbar, in der die jeweils zweiten Werkstücktische 16, 26 im Arbeitsbereich 28 angeordnet sind.

Wenn die ersten Werkstücktische 14, 24 im Arbeitsbereich 28 angeordnet sind, sind bei dem in Figur 1 ersichtlichen Ausführungsbeispiel die jeweils zweiten Werkstücktische 16, 26, in einem Beladebereich 30 angeordnet.

An den ersten Werkstücktischen 14, 24 und zweiten Werkstücktischen 16, 26, können Werkstücke zum Bearbeiten durch die erste Arbeitsspindel 6 und/oder die zweite Arbeitsspindel 8 festgelegt werden.

Bei dem in Figur 1 gezeigten Ausführungsbeispiel sind die ersten Werkstücktische 14, 24 um eine erste Werkstückachse, 15, 25, schwenkbar am jeweiligen Schwenkträger 10, 20, gelagert. Die zweiten Werkstücktische 16, 26, sind jeweils an zweiten Werkstücktischachsen 17, 27, schwenkbar gelagert.

Figur 1 zeigt ein Ausführungsbeispiel der Werkstückmaschine 2, bei der die erste Schwenkträgerachse 12, die zweite Schwenkträgerachse 22, die ersten Werkstückachsen 15, 25 und die zweiten Werkstücktischachsen 17, 27, parallel zu einer horizontal verlaufenden X-Achse verlaufen.

Darüber hinaus ist die erste Werkstückachse 15 zur zweiten Werkstückachse 17 bezüglich einer parallel zur vertikal verlaufenden Y-Achse versetzt zueinander angeordnet. Gleiches gilt für die erste Werkstücktischachse 25 bezüglich der zweiten Werkstücktischachse 27.

Bei dem in Figur 1 gezeigten Ausführungsbeispiel sind der erste Schwenkträger 10 und der zweite Schwenkträger 20 derart am Maschinengestell 4 angeordnet, dass deren erste Schwenkträgerachse 12 bzw. deren zweite Schwenkträgerachse 22, bezüglich einer vertikal verlaufenden Y-Achse übereinander angeordnet sind und beide miteinander fluchten. Der erste Schwenkträger 10 und der zweite Schwenkträger 20 setzen einander bezüglich der vertikal verlaufenden Y-Achse fort. Ferner zeigt Figur 1 eine verschränkte Anordnung der Werkstücktische 14, 24 am jeweiligen Schwenkträger 10, 20, wodurch ein Abstand der Arbeitsspindeln 6,8 zur jeweiligen Schwenkträgerachse 12, 22 reduziert ist.

Solchenfalls sind in der ersten Schwenkstellung der erste Werkstücktisch 14, 24 und der zweite Werkstücktisch 16, 26 eines Schwenkträgers 10, 20 jeweils bezüglich der zugehörigen Schwenkträgerachse 12, 22 des jeweiligen Schwenkträgers 10,20, an dem sie angeordnet sind, punktsymmetrisch zueinander angeordnet sind und beim dargestellten horizontalen Verlauf der jeweiligen Schwenkträgerachse 12, 22, die Schwenkbereiche des ersten Werkstücktischs 14, 24 und des zweiten Werkstücktischs 16, 26 des dazugehören Schwenkträgers 10, 20 bezüglich einer durch die Schwenkträgerachse 12, 22 verlaufende vertikalen Ebene nicht maximal beabstandet sondern, bezüglich des maximalen Abstands, aufeinander zu gerückt und der erste Werkstücktisch 14, 24 und der zweite Werkstücktisch 16, 26 bezüglich der vertikalen Achse versetzt zueinander angeordnet.

Um den ersten Werkstücktisch 14 vom zweiten Werkstücktisch 16 zu trennen, insbesondere, um den Arbeitsbereich 28 vom Beladebereich 30 zu trennen, umfasst der erste Schwenkträger 10 eine erste Trennwand 32, durch die der erste Werkstücktisch 14 räumlich vom zweiten Werkstücktisch 16 getrennt ist. Entsprechend umfasst der zweite Schwenkträger 20 eine zweite Trennwand 34, durch die der erste Werkstücktisch 24 vom zweiten Werkstücktisch 26 räumlich getrennt ist.

### Bezugszeichenliste

- 2: Werkzeugmaschine
- 4: Maschinengestell
- 6: erste Arbeitsspindel
- 8: zweite Arbeitsspindel
- 10: erster Schwenkträger
- 12: erste Schwenkträgerachse
- 14: erster Werkstücktisch
- 15: erste Werkstücktischachse
- 16: zweiter Werkstücktisch
- 17: zweite Werkstücktischachse
- 20: zweiter Schwenkträger
- 22: zweite Schwenkträgerachse
- 24: erster Werkstücktisch
- 25: erste Werkstücktischachse
- 26: zweiter Werkstücktisch
- 27: zweite Werkstücktischachse
- 28: Arbeitsbereich
- 30: Beladebereich
- 32: erste Trennwand
- 34: zweite Trennwand

## Patentansprüche

1. Werkzeugmaschine (2) mit einem Maschinengestell (4), mit mindestens einer ersten Arbeitsspindel (6), mit mindestens einer zweiten Arbeitsspindel (8), mit mindestens einem der ersten Arbeitsspindel (6) zugeordneten ersten Schwenkträger (10), der im Maschinengestell (4) um eine erste Schwenkträgerachse (12) schwenkbar gelagert ist, und der mindestens einen ersten Werkstücktisch (14) und mindestens einen zweiten Werkstücktisch (16) umfasst, die bezüglich der ersten Schwenkträgerachse (12) auf einander gegenüberliegenden Seiten am ersten Schwenkträger (10) angeordnet sind, und mit mindestens einem der zweiten Arbeitsspindel (8) zugeordneten zweiten Schwenkträger (20), der im Maschinengestell (4) um eine parallel zur ersten Schwenkträgerachse (12) verlaufende und zur ersten Schwenkträgerachse (12) beabstandete zweite Schwenkträgerachse (22) schwenkbar gelagert ist, und der mindestens einen ersten Werkstücktisch (24) und mindestens einen zweiten Werkstücktisch (26) umfasst, die bezüglich der zweiten Schwenkträgerachse (22) auf einander gegenüberliegenden Seiten am zweiten Schwenkträger (20) angeordnet sind, wobei der erste Schwenkträger (10) und/oder der zweite Schwenkträger (20) jeweils von einer ersten Schwenkstellung, in der der jeweils erste Werkstücktisch (14, 24) in einem Arbeitsbereich (28) angeordnet und der ersten, bzw. der zweiten Arbeitsspindel (8) zugänglich ist, jeweils in eine zweite Schwenkstellung überführbar ist/sind, in der der jeweils zweite Werkstücktisch (16, 26) im Arbeitsbereich (28) angeordnet und der ersten (6), bzw. der zweiten Arbeitsspindel (8) zugänglich ist, **dadurch gekennzeichnet, dass** die erste Schwenkträgerachse (12) und die parallel zur ersten Schwenkträgerachse (12) verlaufende zweite Schwenkträgerachse (22) parallel zu einer horizontal verlaufenden X-Achse verlaufen, wobei die erste Schwenkträgerachse (12) und die zweite Schwenkträgerachse (22) bezüglich einer vertikal verlaufenden Y-Achse zueinander beabstandet sind und bezüglich der vertikal verlaufenden Y-Achse übereinander angeordnet sind.

2. Werkzeugmaschine (2) nach Anspruch 1, **dadurch gekennzeichnet, dass** in der ersten Schwenkstellung des ersten Schwenkträgers (10) und/oder in der ersten Schwenkstellung des zweiten Schwenkträgers (20) der jeweils zweite Werkstücktisch (16, 26) in einem Beladebereich (30) angeordnet ist, und/oder dass in der zweiten Schwenkstellung des ersten Schwenkträgers (10) und/oder in der zweiten Schwenkstellung des zweiten Schwenkträgers (20) der jeweils erste Werkstücktisch (14, 24) im Beladebereich (30) angeordnet ist.

3. Werkzeugmaschine (2) nach Anspruch 1 oder 2, **dadurch gekennzeichnet, dass** der mindestens eine erste Werkstücktisch (14) und/oder der mindestens eine zweite Werkstücktisch (16) des ersten Schwenkträgers (10) und/oder dass der mindestens eine erste Werkstücktisch (24) und/oder der mindestens eine zweite Werkstücktisch (26) des zweiten Schwenkträgers (20) jeweils zum Aufnehmen und Festlegen mindestens eines Werkstücks ausgebildet ist/sind.

4. Werkzeugmaschine (2) nach einem der vorhergehenden Ansprüche, **dadurch gekennzeichnet, dass** der erste Schwenkträger (10) und der zweite Schwenkträger (20) in einem unabhängigen Betriebsmodus bezüglich ihrer Kinematik entkoppelt, separat und unabhängig voneinander in die erste Schwenkstellung und in die zweite Schwenkstellung überführbar sind und/oder dass der erste Schwenkträger (10) und der zweite Schwenkträger (20) in einem abhängigen Betriebsmodus bezüglich ihrer Kinematik gekoppelt, gemeinsam und gleichzeitig in die erste Schwenkstellung und in die zweite Schwenkstellung überführbar sind.

5. Werkzeugmaschine (2) nach einem der vorhergehenden Ansprüche, **dadurch gekennzeichnet, dass** die mindestens eine erste Arbeitsspindel (6) um eine erste Spindelachse drehbar gelagert ist und/oder dass die mindestens eine zweite Arbeitsspindel (8) um eine zweite Spindelachse drehbar gelagert ist, wobei die erste Spindelachse und/oder die zweite Spindelachse parallel zu einer horizontal verlaufenden Z-Achse verläuft, die quer zur vertikal verlaufenden Y-Achse und quer zur horizontal verlaufenden X-Achse verläuft und/oder wobei die erste Spindelachse und die zweite Spindelachse parallel zueinander verlaufen.

6. Werkzeugmaschine (2) nach einem der vorhergehenden Ansprüche, **dadurch gekennzeichnet, dass** die erste Arbeitsspindel (6) und die zweite Arbeitsspindel (8) bezüglich ihrer Kinematik entkoppelt, separat und unabhängig voneinander betreibbar und/oder verfahrbar sind und/oder dass die erste Arbeitsspindel (6) und die zweite Arbeitsspindel (8) bezüglich ihrer Kinematik gekoppelt, gemeinsam und gleichzeitig betreibbar und/oder verfahrbar sind.

7. Werkzeugmaschine (2) nach einem der vorhergehenden Ansprüche, **dadurch gekennzeichnet, dass** die erste Arbeitsspindel (6) und die zweite Arbeitsspindel (8) vertikal übereinander angeordnet sind, wenn die die erste Schwenkträgerachse (12) und die parallel zur ersten Schwenkträgerachse (12) verlaufende zweite Schwenkträgerachse (22) parallel zu einer horizontal verlaufenden X-Achse verlaufen.

8. Werkzeugmaschine (2) nach einem der vorhergehenden Ansprüche, **dadurch gekennzeichnet, dass** der jeweils erste Werkstücktisch (14, 24) um eine erste Werkstücktischachse (15, 25), welche parallel oder quer zur der ihr zugeordneten ersten Schwenkträgerachse (12) des ersten Schwenkträgers (10), bzw. zweiten Schwenkträgerachse (22) des zweiten Schwenkträgers (20) verläuft, schwenkbar gelagert ist und/oder dass der jeweils zweite Werkstücktisch (16, 26) um eine zweite Werkstücktischachse (17, 27), welche parallel oder quer zur der ihr zugeordneten ersten Schwenkträgerachse (12) des ersten Schwenkträgers (10), bzw. zweiten Schwenkträgerachse (22) des zweiten Schwenkträgers (20) verläuft.

9. Werkzeugmaschine (2) nach Anspruch 8, **dadurch gekennzeichnet, dass** die erste Schwenkträgerachse (12), die zweite Schenkträgerachse (22) sowie die ersten Werkstücktischachsen (15, 25) und die zweiten Werkstücktischachsen (17, 27) parallel zueinander und parallel zur horizontal verlaufenden X-Achse verlaufen, wobei die erste Schwenkträgerachse (12) und die zweite Schenkträgerachse (22), wobei die ersten Werkstücktischachsen (15, 25) untereinander und/oder wobei die zweiten Werkstücktischachsen (17, 27) untereinander bezüglich der quer dazu verlaufenden vertikalen Y-Achse miteinander fluchten oder versetzt zueinander angeordnet sind.

10. Werkzeugmaschine (2) nach Anspruch 8 oder 9, **dadurch gekennzeichnet, dass** in der ersten Schwenkstellung und in der zweiten Schwenkstellung der erste Werkstücktisch (14, 24) und der zweite Werkstücktisch (16, 26) eines Schwenkträgers (10, 20) jeweils bezüglich der zugehörigen Schwenkträgerachse (12, 22) des jeweiligen Schwenkträgers (10, 20), an dem sie angeordnet sind, punktsymmetrisch zueinander angeordnet sind und bei einem horizontalen Verlauf der jeweiligen Schwenkträgerachse (12, 22), der erste Werkstücktisch (14, 24) und der zweite Werkstücktisch (16, 26) bezüglich einer vertikalen Achse versetzt zueinander angeordnet sind und insbesondere die Schwenkbereiche des ersten Werkstücktischs (14, 24) und des zweiten Werkstücktischs (16, 26) des dazugehören Schwenkträgers (10, 20) mit einer durch die Schwenkträgerachse (12, 22) verlaufenden vertikalen Ebene überlappen.

11. Werkzeugmaschine (2) nach einem der Ansprüche 8 bis 10, **dadurch gekennzeichnet, dass** beim ersten Schwenkträger (10) der Abstand zwischen erster Schwenkträgerachse (12) und erster Werkstücktischachse (15) kleiner ist, als der Umkreisradius des ersten Werkstücktisches (14) und/oder der Abstand zwischen erster Schwenkträgerachse (12) und zweiter Werkstücktischachse (17) kleiner ist, als der Umkreisradius des zweiten Werkstücktisches (16), und/oder dass beim zweiten Schwenkträger (20) der Abstand zwischen zweiter Schwenkträgerachse (22) und erster Werkstücktischachse (25) kleiner ist, als der Umkreisradius des ersten Werkstücktisches (24) und/oder der Abstand zwischen zweiter Schwenkträgerachse (22) und zweiter Werkstücktischachse (27) kleiner ist, als der Umkreisradius des zweiten Werkstücktisches (26).

12. Werkzeugmaschine (2) nach einem der vorhergehenden Ansprüche, **dadurch gekennzeichnet, dass** der erste Schwenkträger (10) eine erste Trennwand (32) umfasst, durch die der erste Werkstücktisch (14) und der zweite Werkstücktisch (16) in der ersten Schwenkstellung und in der zweiten Schwenkstellung räumlich voneinander abgetrennt sind und der Beladebereich (30) zum Arbeitsbereich (28) in Gänze oder zumindest abschnittsweise abgeschirmt ist und/oder dass der zweite Schwenkträger (20) eine zweite Trennwand (34) umfasst, durch die der erste Werkstücktisch (24) und der zweite Werkstücktisch (26) in der ersten Schwenkstellung und in der zweiten Schwenkstellung räumlich voneinander abgetrennt sind und der Beladebereich (30) zum Arbeitsbereich (28) in Gänze oder zumindest abschnittsweise abgeschirmt ist.

13. Werkzeugmaschine (2) nach Anspruch 12, **dadurch gekennzeichnet, dass** die erste Trennwand (32) des ersten Schwenkträgers (10) um eine parallel zur ersten Schwenkträgerachse (12) verlaufende Achse flexibel und/oder elastisch biegbar ist und/oder dass die zweite Trennwand (34) des zweiten Schwenkträgers (20) um eine parallel zur zweiten Schwenkträgerachse (22) verlaufende Achse flexibel und/oder elastisch biegbar ist.

14. Werkzeugmaschine (2) nach einem der Ansprüche 12 und 13, **dadurch gekennzeichnet, dass** das Maschinengestell (4) mindestens einen Trennabschnitt umfasst, der zwischen dem ersten Schwenkträger (10) und dem zweiten Schwenkträger (20) angeordnet ist, wobei die erste Trennwand (32) des ersten Schwenkträgers (10), der Trennabschnitt des Maschinengestells (4) und die zweite Trennwand (34) des zweiten Schwenkträgers (20) in der ersten Schwenkstellung und in der zweiten Schwenkstellung den Arbeitsbereich (28) vom Beladebereich (30) räumlich zueinander in Gänze oder zumindest abschnittsweise spalt und/oder fugenlos voneinander trennen.

## Claims

1. Machine tool (2) comprising a machine frame (4), at least one first work spindle (6), at least one second work spindle (8), at least one first pivot carrier (10) associated with the first work spindle (6), which is mounted in the machine frame (4) so as to pivot about a first pivot carrier axis (12), and which comprises at least one first workpiece table (14) and at least one second workpiece table (16), which are arranged on opposite sides of the first pivot carrier (10) with respect to the first pivot carrier axis (12), and with at least one second pivot carrier (20) associated with the second work spindle (8), which is pivotally mounted in the machine frame (4) about a second pivot carrier axis (22) that extends parallel to the first pivot carrier axis (12) and is spaced apart from the first pivot carrier axis (12), and comprising at least one first workpiece table (24) and at least one second workpiece table (26), which are arranged on the second pivot carrier (20) on opposite sides with respect to the second pivot carrier axis (22), wherein the first pivot carrier (10) and/or the second pivot carrier (20), each of which is arranged in a working area (28) from a first pivot position in which the respective first workpiece table (14, 24) is arranged in a working area (28) and is accessible to the first work spindle (6) or the second work spindle (8), respectively, to a second pivot position in which the respective second workpiece table (16, 26) is positioned within the working area (28) and is accessible to the first (6) or the second work spindle (8), **characterised in that** the first pivot carrier axis (12) and the second pivot carrier axis (22), which runs parallel to the first pivot carrier axis (12), run parallel to a horizontal X-axis, wherein the first pivot carrier axis (12) and the second pivot carrier axis (22) are spaced apart from one another relative to a vertically extending Y-axis and are arranged one above the other relative to the vertically extending Y-axis.

2. Machine tool (2) according to claim 1, **characterised in that** the first pivot position of the first pivot carrier (10) and/or in the first pivot position of the second pivot carrier (20), the respective second workpiece table (16, 26) is arranged in a loading area (30), and/or if, in the second pivot position of the first pivot carrier (10) and/or in the second pivot position of the second pivot carrier (20), the respective first workpiece table (14, 24) is arranged in the loading area (30).

3. Machine tool (2) according to claim 1 or 2, **characterised in that** the at least one first workpiece table (14) and/or the at least one second workpiece table (16) of the first pivot carrier (10), and/or the at least one first workpiece table (24) and/or the at least one second workpiece table (26) of the second pivot carrier (20), is/are each configured to receive and secure at least one workpiece.

4. Machine tool (2) according to one of the previous claims, **characterised in that** the first pivot carrier (10) and the second pivot carrier (20) can be decoupled with respect to their kinematics in an independent operating mode and can be moved separately and independently of one another into the first pivot position and into the second pivot position and/or in which the first pivot carrier (10) and the second pivot carrier (20) are coupled in a dependent operating mode with respect to their kinematics and can be moved together and simultaneously to the first pivot position and the second pivot position.

5. Machine tool (2) according to one of the previous claims, **characterised in that** the at least one first work spindle (6) is rotatably mounted about a first spindle axis and/or the at least one second work spindle (8) is rotatably mounted about a second spindle axis, wherein the first spindle axis and/or the second spindle axis extends parallel to a horizontal Z-axis extending transversely to the vertical Y-axis and transversely to the horizontal X-axis, and/or wherein the first spindle axis and the second spindle axis extend parallel to one another.

6. Machine tool (2) according to one of the previous claims, **characterised in that** the first work spindle (6) and the second work spindle (8) can be decoupled with respect to their kinematics and can be operated and/or moved separately and independently of one another and/or in which the first work spindle (6) and the second work spindle (8) are coupled with respect to their kinematics and can be operated and/or moved together and simultaneously.

7. Machine tool (2) according to one of the previous claims, **characterised in that** the first work spindle (6) and the second work spindle (8) are arranged vertically one above the other when the first pivot carrier axis (12) and the second pivot carrier axis (22), which extends parallel to the first pivot carrier axis (12), extend parallel to a horizontal X-axis.

8. Machine tool (2) according to one of the previous claims, **characterised in that** the respective first workpiece table (14, 24) is pivotally mounted around a first workpiece table axis (15, 25), which runs parallel or transversely to the allocated first pivot carrier axis (12) of the first pivot carrier (10) or second pivot carrier axis (22) of the second pivot carrier (20) and/or if the respective second workpiece table (16, 26) runs around a second workpiece table axis (17, 27) that runs parallel or transversely to the allocated first pivot carrier axis (12) of the first pivot carrier (10) or the second pivot carrier axis (22) of the second pivot carrier (20).

9. Machine tool (2) according to claim 8, **characterised in that** the first pivot carrier axis (12), the second pivot carrier axis (22) and the first workpiece table axes (15, 25) and the second workpiece table axes (17, 27) extend parallel to one another and parallel to the horizontally extending X-axis, wherein the first pivot carrier axis (12) and the second pivot carrier axis (22), and the first workpiece table axes (15, 25) are aligned with one another and/or the second workpiece table axes (17, 27) are aligned with one another relative to the vertical Y-axis running transversely thereto, or are arranged offset from one another.

10. Machine tool (2) according to claim 8 or 9, **characterised in that**, in the first pivot position and in the second pivot position, the first workpiece table (14, 24) and the second workpiece table (16, 26) of a pivot carrier (10, 20) are each arranged pointsymmetrically with respect to one another relative to the associated pivot carrier axis (12, 22) of the respective pivot carrier (10, 20) on which they are arranged, and, when the respective pivot carrier axis (12, 22) extends horizontally, the first workpiece table (14, 24) and the second workpiece table (16, 26) are arranged offset from one another with respect to a vertical axis, and, in particular, the pivoting ranges of the first workpiece table (14, 24) and the second workpiece table (16, 26) of the associated pivot carrier (10, 20) overlap with a vertical plane extending through the pivot carrier axis (12, 22).

11. Machine tool (2) according to one of claims 8 to 10, **characterised in that**, in the first pivot carrier (10), the distance between the first pivot carrier axis (12) and the first workpiece table axis (15) is smaller than the circumscribed radius of the first workpiece table (14), and/or the distance between the first pivot carrier axis (12) and the second workpiece table axis (17) is smaller than the circumscribed radius of the second workpiece table (16), and/or, in the second pivot carrier (20), the distance between the second pivot carrier axis (22) and the first workpiece table axis (25) is smaller than the circumscribed radius of the first workpiece table (24), and/or the distance between the second pivot carrier axis (22) and the second workpiece table axis (27) is smaller than the circumscribed radius of the second workpiece table (26).

12. Machine tool (2) according to one of the previous claims, **characterised in that** the first pivot carrier (10) comprises a first partition wall (32) by which the first workpiece table (14) and the second workpiece table (16) are spatially separated from each other in the first pivot position and in the second pivot position and the loading area (30) is shielded from the working area (28) in full or at least in sections and/or if the second pivot carrier (20) includes a second partition wall (34) by means of which the first workpiece table (24) and the second workpiece table (26) are spatially separated from one another in the first pivot position and in the second pivot position and the loading area (30) is shielded from the working area (28) in full or at least in sections.

13. Machine tool (2) according to claim 12, **characterised in that** the first partition wall (32) of the first pivot carrier (10) is flexibly and/or elastically bendable about an axis extending parallel to the first pivot carrier axis (12), and/or the second partition wall (34) of the second pivot carrier (20) is flexibly and/or elastically bendable about an axis extending parallel to the second pivot carrier axis (22).

14. Machine tool (2) according to either one of claims 12 and 13, **characterised in that** the machine frame (4) comprises at least one partition section arranged between the first pivot carrier (10) and the second pivot carrier (20), wherein, in the first pivot position and in the second pivot position, the first partition wall (32) of the first pivot carrier (10), the partition section of the machine frame (4), and the second partition wall (34) of the second pivot carrier (20) separate the working area (28) from the loading area (30), in whole or at least in part, without gaps and/or joints.

## Revendications

1. Machine-outil (2) comprenant un châssis de machine (4), avec au moins une première broche de travail (6), avec au moins une deuxième broche de travail (8), avec au moins un premier support pivotant (10) associé à la première broche de travail (6), qui est monté de manière pivotante dans le châssis de machine (4) autour d'un premier axe de pivotement (12), et qui comprend au moins une première table porte-pièce (14) et au moins une deuxième table porte-pièce (16), disposées sur le premier support pivotant (10) de part et d'autre du premier axe de pivotement (12), et comportant au moins un deuxième support pivotant (20) associé à la deuxième broche de travail (8) associé à au moins l'une des deuxièmes broches de travail (8), qui est monté de manière pivotante dans le châssis de machine (4) autour d'un deuxième axe de pivotement (22) s'étendant parallèlement au premier axe de pivotement (12) et espacé de celui-ci, et qui comprend au moins une première table porte-pièce (24) et au moins une deuxième table porte-pièce (26), qui sont disposées sur le deuxième support pivotant (20) de part et d'autre de l'axe du deuxième support pivotant (22), le premier support pivotant (10) et/ou le deuxième support pivotant (20) pouvant être amenés respectivement d'une première position de pivotement, dans laquelle la première table porte-pièce (14, 24) est disposée dans une zone de travail (28) et est accessible à la première ou à la deuxième broche de travail (8), respectivement, vers une deuxième position de pivotement, dans laquelle la deuxième table porte-pièce (16, 26) est disposé dans la zone de travail (28) et est accessible à la première (6), ou à la deuxième broche de travail (8), **caractérisé en ce que** le premier axe de pivotement (12) et le deuxième axe de pivotement (22), s'étendant parallèlement au premier axe de support pivotant (12), s'étendent parallèlement à un axe X horizontal, le premier axe de pivotement (12) et le deuxième axe de pivotement (22) étant espacés l'un de l'autre par rapport à un axe Y vertical et superposés l'un par rapport à l'autre par rapport à cet axe Y vertical.

2. Machine-outil (2) selon la revendication 1, **caractérisée en ce que**, dans la première position de pivotement du premier support pivotant (10) et/ou dans la première position de pivotement du deuxième support pivotant (20), la deuxième table porte-pièce respective (16, 26) est disposée dans une zone de chargement (30), et/ou **en ce que**, dans la deuxième position de pivotement du premier support pivotant (10) et/ou dans la deuxième position de pivotement du deuxième support pivotant (20), la première table porte-pièce (14, 24) respective est disposée dans la zone de chargement (30).

3. Machine-outil (2) selon la revendication 1 ou 2, **caractérisée en ce que** au moins ladite première table porte-pièce (14) et/ou au moins ladite deuxième table porte-pièce (16) du premier support pivotant (10) et/ou au moins ladite première table porte-pièce (24) et/ou au moins ladite deuxième table porte-pièce (26) du deuxième support pivotant (20) est/sont chacune conçue(s) pour recevoir et immobiliser au moins une pièce à usiner.

4. Machine-outil (2) selon l'une des revendications précédentes, **caractérisée en ce que** le premier support pivotant (10) et le deuxième support pivotant (20) sont découplés sur le plan cinématique dans un mode de fonctionnement indépendant, peuvent être amenés séparément et indépendamment l'un de l'autre dans la première position de pivotement et dans la deuxième position de pivotement, et/ou **en ce que** le premier support pivotant (10) et le deuxième support pivotant (20), dans un mode de fonctionnement dépendant, sont couplés sur le plan cinématique et peuvent être amenés conjointement et simultanément dans la première position de pivotement et dans la deuxième position de pivotement.

5. Machine-outil (2) selon l'une des revendications précédentes, **caractérisée en ce qu'**au moins ladite première broche de travail (6) est montée de manière à pouvoir tourner autour d'un premier axe de broche et/ou **en ce qu'**au moins ladite deuxième broche de travail (8) est montée de manière à pouvoir tourner autour d'un deuxième axe de broche, le premier axe de broche et/ou le deuxième axe de broche étant parallèle à un axe Z horizontal, qui s'étend transversalement à l'axe Y vertical et transversalement à l'axe X horizontal, et/ou le premier axe de broche et le deuxième axe de broche étant parallèles l'un à l'autre.

6. Machine-outil (2) selon l'une des revendications précédentes, **caractérisée en ce que** la première broche de travail (6) et la deuxième broche de travail (8) sont découplées sur le plan cinématique, peuvent fonctionner et/ou se déplacer séparément et indépendamment l'une de l'autre, et/ou **en ce que** la première broche de travail (6) et la deuxième broche de travail (8) sont couplées sur le plan cinématique et peuvent être actionnées et/ou déplacées conjointement et simultanément.

7. Machine-outil (2) selon l'une des revendications précédentes, **caractérisée en ce que** la première broche de travail (6) et la deuxième broche de travail (8) sont disposées verticalement l'une au-dessus de l'autre lorsque le premier axe de pivotement (12) et le deuxième axe de support pivotant (22), s'étendant parallèlement au premier axe de pivotement (12), s'étendent parallèlement à un axe X horizontal.

8. Machine-outil (2) selon l'une des revendications précédentes, **caractérisée en ce que** la première table porte-pièce (14, 24) pivote autour d'un premier axe de table porte-pièce (15, 25), qui s'étend parallèlement ou transversalement au premier axe de pivotement (12) du premier support pivotant (10) ou au deuxième axe de pivotement (22) du deuxième support pivotant (20) qui lui est associé, et/ou **en ce que** la deuxième table porte-pièce respective (16, 26) est montée de manière à pouvoir pivoter autour d'un deuxième axe de table porte-pièce (17, 27), qui s'étend parallèlement ou transversalement par rapport au premier axe de pivotement (12) du premier support pivotant (10) ou au deuxième axe de pivotement (22) du deuxième support pivotant (20) qui lui est associé.

9. Machine-outil (2) selon la revendication 8, **caractérisée en ce que** le premier axe de pivotement (12), le deuxième axe de pivotement (22) ainsi que les premiers axes de table porte-pièce (15, 25) et les deuxièmes axes de table porte-pièce (17, 27) sont parallèles entre eux et parallèles à laxe X s'étendant horizontalement, le premier axe de pivotement (12) et le deuxième axe de pivotement (22), les premiers axes de la table porte-pièce (15, 25) entre eux et/ou les deuxièmes axes de la table porte-pièce (17, 27) entre eux étant alignés ou décalés les uns par rapport aux autres par rapport à l'axe Y vertical s'étendant transversalement à ceux-ci.

10. Machine-outil (2) selon la revendication 8 ou 9, **caractérisée en ce que**, dans la première position de pivotement et dans la deuxième position de pivotement, la première table porte-pièce (14, 24) et la deuxième table porte-pièce (16, 26) d'un support pivotant (10, 20) sont disposées de manière symétrique par rapport à un point les unes par rapport aux autres, chacune par rapport à l'axe de pivotement correspondant (12, 22) du support pivotant respectif (10, 20) sur lequel elles sont disposées, et dans le cas d'une orientation horizontale de l'axe du porte-pièce pivotant respectif (12, 22), la première table porte-pièce (14, 24) et la deuxième table porte-pièce (16, 26) sont décalées l'une par rapport à l'autre par rapport à un axe vertical, et en particulier, les zones de pivotement de la première table porte-pièce (14, 24) et de la deuxième table porte-pièce (16, 26) du support pivotant (10, 20) correspondant se chevauchent avec un plan vertical passant par l'axe du support pivotant (12,22).

11. Machine-outil (2) selon l'une des revendications 8 à 10, **caractérisée en ce que**, pour le premier support pivotant (10), la distance entre le premier axe de pivotement (12) et le premier axe de la table porte-pièce (15) est inférieure au rayon de la circonférence de la première table porte-pièce (14) et/ou la distance entre le premier axe de pivotement (12) et le deuxième axe de la table porte-pièce (17) est inférieure au rayon de la circonférence de la deuxième table porte-pièce (16), et/ou **en ce que**, pour le deuxième support pivotant (20), la distance entre le deuxième axe de pivotement (22) et le premier axe de la table porte-pièce (25) est inférieure au rayon de la circonférence de la première table porte-pièce (24) et/ou la distance entre le deuxième axe de pivotement (22) et le deuxième axe de la table porte-pièce (27) est inférieure au rayon de la circonférence de la deuxième table porte-pièce (26).

12. Machine-outil (2) selon l'une des revendications précédentes, **caractérisée en ce que** le premier support pivotant (10) comprend une première cloison (32) par laquelle la première table porte-pièce (14) et la deuxième table porte-pièce (16) sont séparées spatialement l'une de l'autre dans la première position de pivotement et dans la deuxième position de pivotement, et la zone de chargement (30) est isolée de la zone de travail (28) dans son intégralité ou au moins par sections, et/ou **en ce que** le deuxième support pivotant (20) comprend une deuxième cloison (34) qui sépare spatialement la première table porte-pièce (24) et la deuxième table porte-pièce (26) dans la première position de pivotement et dans la deuxième position de pivotement, et qui isole la zone de chargement (30) de la zone de travail (28) dans son intégralité ou au moins par sections.

13. Machine-outil (2) selon la revendication 12, **caractérisée en ce que** la première cloison (32) du premier support pivotant (10) peut fléchir de manière flexible et/ou élastique autour d'un axe parallèle au premier axe de pivotement (12) du support pivotant et/ou **en ce que** la deuxième cloison (34) du deuxième support pivotant (20) est flexible et/ou élastiquement pliable autour d'un axe parallèle au deuxième axe de pivotement (22).

14. Machine-outil (2) selon l'une des revendications 12 et 13, **caractérisée en ce que** le châssis de machine (4) comprend au moins une section de séparation qui est disposée entre le premier support pivotant (10) et le deuxième support pivotant (20), la première cloison (32) du premier support pivotant (10), la section de séparation du châssis de machine (4) et la deuxième cloison (34) du deuxième support pivotant (20) séparent spatialement, dans la première position de pivotement et dans la deuxième position de pivotement, la zone de travail (28) de la zone de chargement (30), soit entièrement, soit au moins par sections, et/ou les séparent l'une de l'autre.
